# EUROPÄISCHE PATENTSCHRIFT

(11) **EP 3 823 866 B1**
(45) Veröffentlichungstag und Bekanntmachung des Hinweises auf die Patenterteilung: **07.08.2024**
(21) Anmeldenummer: 19730129.4
(22) Anmeldetag: 05.06.2019
(51) Int. Cl.: B60T 7/10, B60T 7/12

(54) **VERFAHREN ZUR FAHRERASSISTENZ, BEI DEM EIN FAHRZEUG EIN FAHRMANÖVER AUTOMATISCH AUSFÜHRT, SOWIE STEUER- UND REGELEINRICHTUNG FÜR EINE BREMSEINRICHTUNG EINES FAHRZEUGS**
DRIVER ASSISTANCE METHOD IN WHICH A VEHICLE PERFORMS A DRIVING MANOEUVRE AUTOMATICALLY, AND CONTROL DEVICE FOR A BRAKING DEVICE OF A VEHICLE
PROCÉDÉ D'AIDE À LA CONDUITE AU COURS DUQUEL UN VÉHICULE EFFECTUE AUTOMATIQUEMENT UNE MANOEUVRE DE CONDUITE, ET DISPOSITIF DE COMMANDE ET DE RÉGULATION POUR UN DISPOSITIF DE FREINAGE D'UN VÉHICULE

(30) Priorität: 19.07.2018 DE 102018212064
(43) Veröffentlichungstag der Anmeldung: 26.05.2021
(73) Patentinhaber: Robert Bosch GmbH, 70442 Stuttgart (DE)
(72) Erfinder: BAEHRLE-MILLER, Frank, 71101 Schoenaich (DE); WIENKEN, Hubertus, 74243 Langenbrettach (DE)
(86) Internationale Anmeldenummer: PCT/EP2019/064657
(87) Internationale Veröffentlichungsnummer: WO 2020/015918

(56) Entgegenhaltungen:
- DE-A1- 102006 004 258
- DE-A1- 102013 006 688

## Beschreibung

### Stand der Technik

Die Erfindung betrifft ein Verfahren zur Fahrerassistenz, bei dem ein Fahrzeug ein Fahrmanöver automatisch ausführt, sowie eine Steuer- und Regeleinrichtung für eine Bremseinrichtung eines Fahrzeugs nach den Oberbegriffen der nebengeordneten Ansprüche.

Aus der DE 10 2012 212 090 A1 ist es bekannt, während der automatischen Ausführung eines Fahrmanövers eines Fahrzeugs, nämlich während eines Einparkvorgangs, mittels einer Feststellbremse des Fahrzeugs ständig eine Bremswirkung auf die Räder des Fahrzeugs auszuüben. Hierdurch wird sichergestellt, dass das Fahrzeug beispielsweise auch im Falle einer Fehlfunktion unmittelbar und sicher gehalten werden kann. Auch aus der DE 2015 214 524 A1 sowie der DE 10 2015 216 214 A1 ist es bekannt, während eines automatischen und insoweit autonom durchgeführten Einparkvorgangs eine Feststellbremse ständig aktiviert zu halten. Die DE 10 2013 006 688 A1 beschreibt ein Verfahren zum automatischen Lösen einer Bremse während eines Anfahrvorgangs. Die DE 10 2006 004258 A1 betrifft eine Bremsregelungsanlage für Kraftfahrzeuge.

### Offenbarung der Erfindung

Das der Erfindung zugrunde liegende Problem wird durch ein Verfahren sowie eine Steuer- und Regeleinrichtung mit den Merkmalen der nebengeordneten unabhängigen Ansprüche 1 und 9 gelöst. Vorteilhafte Weiterbildungen sind darüber hinaus in Unteransprüchen angegeben.

Zu der Erfindung gehört ein Verfahren zur Fahrerassistenz, bei dem ein Fahrzeug ein Fahrmanöver, und zwar einen Einparkvorgang, automatisch, also "vollautonom" ausführt. Eine Bremseinrichtung, erfindungsgemäß eine Feststellbremse des Fahrzeugs, ist während der Ausführung des Fahrmanövers zumindest teilweise betätigt, so dass ständig eine Bremswirkung auf die Räder mindestens einer Achse ausgeübt wird. Somit muss während des Fahrmanövers ein Antrieb des Fahrzeugs zumindest auch gegen die Bremswirkung der Bremseinrichtung arbeiten, um das Fahrzeug längs eines Fahrwegs bewegen zu können.

Erfindungsgemäß wird vorgeschlagen, dass während des Fahrmanövers mindestens ein Betriebsparameter, der mit einer ungewollten, also nicht gesteuerten bzw. nicht bewusst herbeigeführten Erhöhung der auf mindestens ein Rad ausgeübten Bremswirkung in einem Zusammenhang steht, erfasst und ausgewertet wird. Abhängig vom Ergebnis der Auswertung wird eine Bremswirkung auf mindestens ein Rad - jenes Rad, bei dem eine ungewollte Erhöhung der Bremswirkung festgestellt wurde - reduziert.

Der Erfindung liegt die Erkenntnis zugrunde, dass sich durch das permanente Bereitstellen einer Bremswirkung während des Fahrmanövers die Temperatur der Bremseinrichtung verändern kann. Beispielsweise können Bremsscheiben und Bremsbeläge der Bremseinrichtung ihre Temperatur während des Fahrmanövers ändern, insbesondere kann sich diese Temperatur aufgrund der vorliegenden Reibung erhöhen. Dabei kann ein solches Fahrmanöver je nach Ausprägung auch längere Zeit andauern, z.B. bei einem Einparken in einem Parkhaus. Dabei ist es möglich, dass das Fahrzeug zunächst an einem Übergabeplatz zwischengeparkt wird und sich das Fahrzeug dann automatisch und autonom den endgültigen Parkplatz sucht. Die Parkplatzsuche kann somit mehrere Minuten andauern. Bei der Fahrt wird das Fahrzeug permanent gebremst, so dass sich die Bremsscheibe und die weiteren Komponenten aufheizen.

Zusätzlich zu Bremsscheiben und Bremsbelägen können sich auch die Temperaturen in den angrenzenden Komponenten (z.B. Bremsflüssigkeit) ändern, insbesondere erhöhen. Durch die besagten Effekte kann sich das Bremsmoment und somit die von der Bremseinrichtung während des Fahrmanövers auf die Räder ausgeübte Bremswirkung signifikant ändern, nämlich erhöhen bzw. verstärken. Dies kann die Ausführung des Fahrmanövers erschweren.

Mit dem hier vorgeschlagenen Verfahren wird sichergestellt, dass das Fahrmanöver auch dann fortgesetzt bzw. zuverlässig ausgeführt werden kann, wenn sich einzelne oder mehrere Komponenten der Bremseinrichtung während des Fahrmanövers erwärmen und sich hierdurch die während des Fahrmanövers auf die Räder ausgeübte Bremswirkung ungewollt erhöht. Auf diese Weise wird die automatische "vollautonome" Ausführung des Fahrmanövers erleichtert bzw. sichergestellt. Mittels der Erfindung wird nämlich während der Ausführung des Fahrmanövers erkannt, ob sich die auf die Räder ausgeübte Bremswirkung ungewollt erhöht. Wird festgestellt, dass eine solche ungewollte Erhöhung der Bremswirkung vorliegt, wird die Bremseinrichtung so angesteuert, dass die Bremswirkung zumindest dort, also an jenem Rad, wo die ungewollte Erhöhung festgestellt wurde, reduziert wird.

Eine mögliche Ausgestaltung des Verfahrens sieht vor, dass der Betriebsparameter eine ein Antriebsmoment des Antriebs des Fahrzeugs charakterisierende Größe umfasst, und dass die Bremswirkung auf die Räder einer angetriebenen Achse reduziert wird, wenn die das Antriebsmoment charakterisierende Größe eine Schwelle überschreitet. Hierzu gehört auch, dass dann die Bremswirkung auf die Räder einer angetriebenen Achse reduziert wird, wenn eine Änderung der das Antriebsmoment charakterisierenden Größe eine Schwelle überschreitet.

Dem liegt die Überlegung zugrunde, dass zur Bewegung des Fahrzeugs während eines Fahrmanövers bei "normaler" Bremswirkung der Bremseinrichtung ein bestimmtes Antriebsmoment des Antriebs des Fahrzeugs erforderlich ist. Erhöht sich aus den oben genannten Gründen ungewollt die Bremswirkung der Bremseinrichtung während des Fahrmanövers, muss der Antrieb ein erhöhtes Antriebsmoment aufbringen, um das Fahrzeug weiterhin mit einer gewünschten Geschwindigkeit während des Fahrmanövers bewegen zu können. Dies wird erfindungsgemäß erfasst und in der Folge das Antriebsmoment entsprechend reduziert.

In einer Weiterbildung hierzu wird vorgeschlagen, dass die Bremswirkung auf die Räder einer angetriebenen Achse nur dann reduziert wird, wenn die Schwelle nicht mit einer Längsneigung des Fahrzeugs während des Fahrmanövers korreliert. Dem liegt die Überlegung zugrunde, dass ein erhöhtes Antriebsmoment während eines Fahrmanövers nicht nur von einer ungewollten Erhöhung der Bremswirkung verursacht werden kann, sondern ein solches erhöhtes Antriebsmoment auch durch eine Steigung des Fahrwegs des Fahrzeugs während des Fahrmanövers erforderlich werden kann. Eine solche Steigung des Fahrwegs drückt sich wiederum in einer entsprechenden Längsneigung des Fahrzeugs aus. Diese kann mit entsprechenden Sensoren erfasst werden. Erfindungsgemäß wird die Schwelle der das Antriebsmoment charakterisierenden Größe, ab der die Bremswirkung reduziert wird, mit der Längsneigung des Fahrzeugs korreliert - sie hängt also von der Längsneigung des Fahrzeugs bzw. der Steigung des Fahrwegs ab.

Deutet die Längsneigung also auf eine größere Steigung des Fahrwegs hin, wird eine größere Schwelle angewendet, wohingegen dann, wenn die Längsneigung auf eine kleinere Steigung des Fahrwegs oder sogar auf einen ebenen Fahrweg hindeutet, eine kleinere Schwelle zur Anwendung kommt. Insbesondere kann erfindungsgemäß während des Fahrmanövers eine erforderliche Änderung des Antriebsmoments mit einer während des Fahrmanövers festgestellten Änderung der Steigung korreliert werden. Wenn detektiert wird, dass das Antriebsmoment ansteigt, obwohl sich die Steigung nur unwesentlich während des Fahrmanövers ändert, wird die notwendige Erhöhung des Antriebsmoments einer ungewollten Erhöhung der Bremswirkung zugeschrieben und in der Folge die Bremswirkung auf die angetriebenen Räder zumindest teilweise reduziert.

Dabei wird vorgeschlagen, dass die Korrelation zwischen der Längsneigung und der charakterisierenden Größe zu Beginn des Fahrmanövers ermittelt wird. Dem liegt die Überlegung zugrunde, dass das Verhältnis zwischen notwendigem Antriebsmoment zu einer definierten Steigung zu Beginn eines Fahrmanövers variieren kann, da eine unterschiedliche Beladung, eine unterschiedliche Bremsentemperatur aber auch unterschiedliche Reibwerte aufgrund der Vorgeschichte (Fading, Verglasung, Verschmutzung) vorliegen können. Wenn die Korrelation zu Beginn des Fahrmanövers ermittelt wird, ist das Verfahren weitgehend robust gegenüber den genannten äußeren Einflüssen.

Das erfindungsgemäße Verfahren sieht vor, dass der Betriebsparameter die Raddrehzahlen der Räder einer Achse umfasst, und dass die Bremswirkung auf jenes Rad, welches eine geringere Raddrehzahl als das andere Rad aufweist, wenigstens dann teilweise reduziert wird, wenn eine Differenz der Raddrehzahlen der beiden Räder einen Schwellwert überschreitet. Das erfindungsgemäße Verfahren ist sehr einfach realisierbar. Dabei liegt der Erfindung die Überlegung zugrunde, dass die ungewollte

Erhöhung der Bremswirkung meist nicht symmetrisch und identisch bei beiden Räder einer Achse auftritt, so das eine oberhalb von dem Schwellwert liegende Differenz der Raddrehzahlen ein Indiz dafür ist, dass eines der beiden Räder einen erhöhten Schlupf aufweist. Während bei einem klassischen ABS zwar ebenfalls eine Bremswirkung auf der Basis eines Vergleichs von Raddrehzahlen reduziert wird, wird das ABS dazu eingesetzt, um eine möglichst hohe Bremswirkung und Fahrzeugstabilität während eines Bremsvorgangs sicherzustellen. Das vorliegende Verfahren hat genau das Gegenteil zum Ziel, nämlich es soll eine Fortsetzung des Fahrmanövers sicherstellen.

In Weiterbildung hierzu wird vorgeschlagen, dass der Schwellwert für die Differenz in Abhängigkeit von einem Lenkeinschlag angepasst wird, insbesondere, dass der Schwellwert bei einem höheren Lenkeinschlag größer ist als bei einem geringeren Lenkeinschlag. Hierdurch wird die Zuverlässigkeit bei der Ausführung des Verfahrens erhöht. Dies gilt dann, wenn die Differenz der Raddrehzahlen an einer nicht-angetriebenen Achse erfasst bzw. ausgewertet wird.

Vorgeschlagen wird ferner, dass der Schwellwert für die Differenz in Abhängigkeit von der Fahrtrichtung angepasst wird, insbesondere, dass bei einem Fahrzeug mit Frontlenkung bei einer Rückwärtsfahrt der Schwellwert größer ist als bei einer Vorwärtsfahrt. Dies gilt dann, wenn die Differenz der Raddrehzahlen an einer nicht-angetriebenen Achse erfasst bzw. ausgewertet wird. Hierdurch wird ebenfalls die Zuverlässigkeit bei der Ausführung des Verfahrens erhöht.

Möglich ist, dass die Bremswirkung auf die Räder einer nicht-angetriebenen Achse ausgeübt wird. Zusätzlich oder alternativ ist aber auch möglich, dass die Bremswirkung auf die Räder einer angetriebenen Achse ausgeübt wird.

Zu der Erfindung gehört auch eine Steuer- und Regeleinrichtung für eine Bremseinrichtung, und zwar eine Feststellbremse, eines Fahrzeugs, mit einem Prozessor und einem Speicher, die so ausgebildet ist, dass sie zur Ausführung eines Verfahrens der oben beschriebenen Art ausgebildet ist.

Nachfolgend werden beispielhafte Ausführungsformen der Erfindung unter Bezugnahme auf die beigefügte Zeichnung erläutert. In dieser zeigen:
- Figur 1: eine schematische Draufsicht auf ein Fahrzeug mit einer Bremseinrichtung;
- Figur 2: eine Seitenansicht auf ein Fahrzeug während eines Fahrmanövers, dessen Fahrweg eine Steigung bergauf aufweist;
- Figur 3: ein Flussdiagramm eines 1. Verfahrens zur Fahrerassistenz, bei dem ein Fahrzeug ein Fahrmanöver automatisch ausführt; und
- Figur 4: ein Flussdiagramm eines 2. Verfahrens zur Fahrerassistenz, bei dem ein Fahrzeug ein Fahrmanöver automatisch ausführt.

Nachfolgend werden funktionsäquivalente Komponenten oder Bereiche in unterschiedlichen Ausführungsformen mit unterschiedlichen Bezugszeichen bezeichnet.

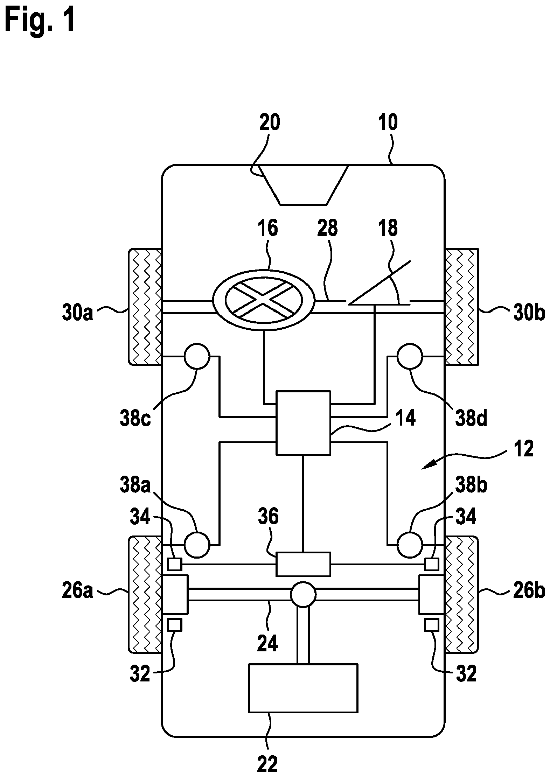

Figur 1 zeigt ein Fahrzeug 10, welches ein Fahrerassistenzsystem 12 aufweist. Das Fahrerassistenzsystem 12 umfasst eine Steuer- und Regeleinrichtung 14 mit einem Prozessor und einem Speicher (beide nicht dargestellt) und ist so eingerichtet, dass das Fahrzeug 10 ein Fahrmanöver automatisch und vollautonom ausführen kann. Um sowohl die Querführung als auch die Längsführung des Fahrzeugs 10 übernehmen zu können, verfügt das Fahrerassistenzsystem 12 über Verbindungen zu weiteren Systemen des Fahrzeugs 10, mit denen das Fahrzeug 10 gelenkt, beschleunigt und/oder abgebremst werden kann. Diese Verbindungen sind in der Figur 1 mit einer schematischen Verbindung von der Steuer- und Regeleinrichtung 14 zu einem Lenkrad 16 und einem Gaspedal 18 angedeutet. Des Weiteren verfügt das als Beispiel in der Figur 1 dargestellte Fahrerassistenzsystem 12 über Mittel, um einen Zustand des Fahrzeugs 10 relativ zur Umgebung zu erfassen. Hierzu gehört unter anderem auch ein Sensor 20, mit dem eine Längsneigung des Fahrzeugs 10 ermittelt und/oder erfasst werden kann.

Um das Fahrzeug 10 anzutreiben, verfügt das Fahrzeug 10 über einen Antrieb 22, der in dem in Figur 1 dargestellten Beispiel auf eine Hinterachse 24 einwirkt und somit Hinterräder 26a und 26b des Fahrzeugs 10 antreibt. Der Antrieb 22 kann beispielsweise ein Verbrennungsmotor und/oder ein Elektromotor sein. Zu dem Fahrzeug 10 gehört auch eine nicht-angetriebene, angelenkte Vorderachse 28 mit Vorderrädern 30a und 30b.

Zum Abbremsen des Fahrzeugs 10 verfügt dieses über zwei voneinander unabhängige Bremseinrichtungen. Im normalen Fahrbetrieb des Fahrzeugs 10 wird eine auf alle Räder wirkende Betriebsbremse 32 verwendet, die in der Regel über eine Hydraulik bzw. über ein nicht dargestelltes Bremspedal betätigt wird (obwohl in der Zeichnung nur aus Gründen der Vereinfachung dargestellt ist, dass die Betriebsbremse 32 auf die Hinterräder 26a und 26b wirkt). Darüber hinaus verfügt das Fahrzeug 10 über eine auf die Hinterräder 26a und 26b wirkende Feststellbremse 34, über die das Fahrzeug 10, beispielsweise wenn es auf einem Parkplatz abgestellt ist, im Stillstand gehalten wird.

Die in Figur 1 dargestellte Feststellbremse 34 wird elektrisch, beispielsweise elektromechanische oder elektrohydraulisch, betätigt, wobei das Fahrerassistenzsystem 12 bzw. die Steuer- und Regeleinrichtung 14 über Mittel 36 verfügt, über die die Feststellbremse 34 angesteuert werden kann. Je nach Ausführungsform des Fahrerassistenzsystems 12 können diese Mittel 36 auch in der Steuer- und Regeleinrichtung 14 integriert sein, oder sie können Teil eines weiteren, vorliegend jedoch nicht dargestellten Assistenzsystems des Fahrzeugs 10 sein. Zu dem Fahrzeug 10 gehören ferner Sensoren 38a-d, die den Hinterrädern 26a und 26b sowie den Vorderrädern 30a und 30b zugeordnet sind und die deren Drehzahl erfassen. Die Sensoren 38a-d sind mit der Steuer- und Regeleinrichtung 14 verbunden.

Das Fahrerassistenzsystem 12 ist dazu ausgebildet, ein Fahrmanöver automatisch auszuführen, so dass das Fahrzeug 10 hierbei vollautonom betrieben wird. Ein solches Fahrmanöver ist der Erfindung nach ein Einparken. Wird durch das Fahrerassistenzsystem 12 ein Fahrmanöver automatisch ausgeführt, so ist vorgesehen, dass durch das Fahrerassistenzsystem 12 die Feststellbremse 34 während des Fahrmanövers zumindest teilweise betätigt ist. Um das Fahrzeug 10 dennoch bewegen zu können, muss der Antrieb 22 gegen die Bremswirkung der Feststellbremse 34 arbeiten. Insbesondere dann, wenn das Fahrmanöver länger andauert, können sich hierdurch bestimmte Komponenten der Feststellbremse 34 erwärmen. In der Folge kann sich die im vorliegenden Fall auf die Hinterräder 26a und 26b durch die Feststellbremse 34 ausgeübte Bremswirkung ungewollt, also nicht durch eine Ansteuerung bewirkt, erhöhen, wodurch die Bewegung des Fahrzeugs während des Fahrmanövers erschwert oder sogar verhindert werden kann.

Um dies zu verhindern, ist auf dem Speicher der Steuer- und Regeleinrichtung 14 ein Computerprogramm abgespeichert, welches auf dem Prozessor der Steuer- und Regeleinrichtung 14 ausgeführt werden kann, und durch welches die beschriebene ungewollte Erhöhung der Bremswirkung zumindest teilweise wieder rückgängig gemacht werden kann.

Hierzu wird von der Steuer- und Regeleinrichtung 14 während des Fahrmanövers mindestens ein Betriebsparameter, der mit einer ungewollten Erhöhung der auf mindestens ein Rad 26a und 26b ausgeübten Bremswirkung in einem Zusammenhang steht, erfasst und ausgewertet. Ein solcher Betriebsparameter ist vorliegend beispielhaft eine Größe, die ein Antriebsmoment des Antriebs 22 charakterisiert. Dieser Betriebsparameter kann mittels eines Sensors erfasst werden, er kann aber auch aus anderen Betriebsparametern des Antriebs 22 ermittelt werden.

Ist die Bremswirkung größer als gewollt, muss das Antriebsmoment des Antriebs 22 entsprechend erhöht werden, um eine gewünschte Geschwindigkeit des Fahrzeugs 10 zu erreichen bzw. zu halten. Dabei wird die aktuelle das Antriebsmoment charakterisierende Größe während des Fahrmanövers kontinuierlich mit einem in der Steuer- und Regeleinrichtung 14 vorhandenen oder gebildeten Schwellwert verglichen. Überschreitet die aktuelle das Antriebsmoment charakterisierende Größe den Schwellwert, wird hieraus auf eine ungewollte und signifikante Erhöhung der durch die Feststellbremse 34 auf die Hinterräder 26a und 26b ausgeübten Bremswirkung geschlossen. In der Folge wird die Feststellbremse 34 von der Steuer- und Regeleinrichtung 14 so angesteuert, dass die Bremswirkung um ein vorgegebenes Maß reduziert wird.

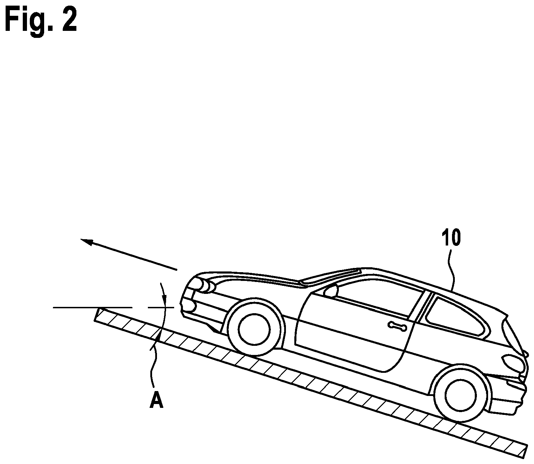

Wie aus Figur 2 ersichtlich ist, kann es jedoch sein, dass das Fahrzeug 10 während des Fahrmanövers entlang eines Fahrwegs bewegt werden muss, der eine Steigung aufweist. Beispielsweise kann es in einem Parkhaus sein, dass das Fahrzeug 10 über eine Rampe in ein höheres Stockwerk fahren muss. Eine solche Rampe trägt in Figur 2 das Bezugszeichen 40. Man erkennt, dass die Rampe bezüglich der Horizontalen einen Winkel A einschließt, also eine Steigung aufweist. Entsprechend weist auch das Fahrzeug 10 eine Längsneigung entsprechend dem Winkel A auf.

Wie ohne weiteres verständlich ist, muss der Antrieb 22 dann, wenn das Fahrzeug 10 die Rampe 40 hochfährt, ein höheres Antriebsmoment aufbringen als während einer Phase des Fahrmanövers, in der das Fahrzeug 10 horizontal bewegt wird. Daher ist es möglich, die erwähnte Schwelle für die das Antriebsmoment des Antriebs 22 charakterisierende Größe nicht als starren Wert auszubilden. Stattdessen kann sie dann von der beispielsweise durch den Neigungssensor 20 ermittelten Längsneigung des Fahrzeugs 10 abhängen.

Dabei ist es zusätzlich möglich, dass das Verhältnis zwischen der das Antriebsmoment charakterisierenden Größe (für ein Standard-Antriebsmoment, welches beispielsweise das Fahrzeug 10 mit einer bestimmten Geschwindigkeit bewegen kann) und des Fahrwegs bzw. der Längsneigung des Fahrzeugs 10 zu einem Zeitpunkt im Betrieb des Fahrzeugs 10 ermittelt wird, zu dem sichergestellt ist, dass eine signifikante Erhöhung der Temperatur der Feststellbremse 34 und somit eine signifikante und ungewollte Erhöhung der Bremswirkung noch nicht stattgefunden hat. Ein solcher Zeitpunkt ist beispielsweise der Beginn des Fahrmanövers, also der Beginn beispielsweise des Einparkens.

Dieses Verhältnis kann sich vom Beginn eines Fahrmanövers bis zum Beginn eines anderen Fahrmanövers verändern, da das Fahrzeug 10 bei unterschiedlichen Fahrmanövern unterschiedlich beladen sein kann, aufgrund vorangegangener Betriebszustände die Feststellbremse 34 eine unterschiedliche Temperatur aufweisen kann, aber auch beispielsweise Bremsbeläge der Feststellbremse 34 unterschiedliche Reibwerte aufweisen können, beispielsweise verursacht durch Fading, Verglasung, Verschmutzung, etc. Abhängig von dem festgestellten Verhältnis wird dann die Schwelle für eine bestimmte Steigung bzw. werden die Schwellen für bestimmte Steigungen definiert. Dies heißt nichts anderes, als dass die durch die Feststellbremse 34 auf die Hinterräder 26a und 26b der angetriebenen Hinterachse 24 ausgeübte Bremswirkung nur dann reduziert wird, wenn die Schwelle nicht mit der Längsneigung A des Fahrzeugs 10 während des Fahrmanövers korreliert, wobei zu Beginn des Fahrmanövers die Korrelation zwischen der Längsneigung A und der charakterisierenden Größe ermittelt wird.

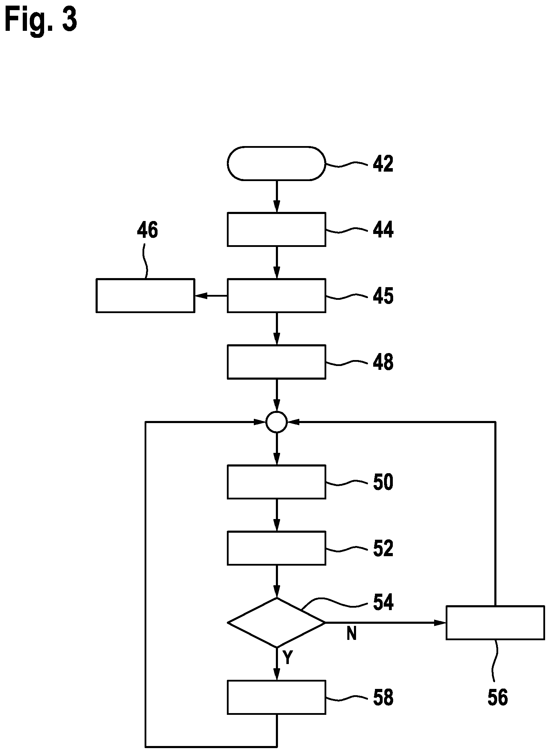

Ein entsprechendes Verfahren wird nun unter Bezugnahme auf Figur 3 erläutert: nach einem Startblock 42 wird das Fahrzeug 10 in einem Block 44 zunächst angehalten, beispielsweise um die in dem Fahrzeug 10 befindlichen Personen aussteigen zu lassen. Dann wird in einem Block 45 das gewünschte Fahrmanöver, und zwar ein autonomes Einparken, gestartet. In einem Block 46 wird eine gewünschte Bremswirkung durch Einstellen einer bestimmten Klemmkraft der Feststellbremse 34 eingestellt. Diese Bremswirkung wird dann durch die Feststellbremse 34 während des Fahrmanövers (Block 48) zumindest zunächst auf die Hinterräder 26a und 26b ausgeübt, so dass der Antrieb 22 das Fahrzeug 10 auch gegen die Wirkung der Feststellbremse 34 zu bewegen hat.

In einem Block 50 wird die Steigung des Fahrwegs beispielsweise mittels des Neigungssensor 20 ermittelt. Befindet sich das Fahrzeug 10 auf der in Figur 2 dargestellten Rampe 40, entspricht diese Steigung dem Winkel A. In einem nachfolgenden Block 52 wird eine das aktuelle Antriebsmoment des Antriebs 22 charakterisierende Größe erfasst bzw. ermittelt. Danach wird in einem Block 54 geprüft, ob das aktuelle Antriebsmoment des Antriebs 22 der ermittelten Steigung mit dem Winkel A entspricht. Hierzu wird das Antriebsmoment mit einem Schwellwert verglichen, welcher, wie oben beschrieben wurde, von der Längsneigung A des Fahrzeugs 10 abhängt.

Liegt keine Überschreitung des Schwellwerts vor, wird in einem Block 56 festgelegt, dass die eingestellte Klemmkraft bzw. die ausgeübte Bremswirkung unverändert beibehalten werden. Wird dagegen im Vergleichsblock 54 festgestellt, dass das Antriebsmoment den Schwellwert überschreitet, wird in einem Block 58 die Feststellbremse 34 von der Steuer- und Regeleinrichtung 14 so angesteuert, dass die Klemmkraft bzw. die Bremswirkung um einen bestimmten vorgegebenen Wert reduziert wird. Nach den jeweiligen Blöcken 56 und 58 erfolgt ein Rücksprung vor den Block 50.

Bei der Erfindung werden als Betriebsparameter die Raddrehzahlen der Räder einer Achse verwendet, vorliegend beispielhaft die Raddrehzahlen der Hinterräder 26a und 26b der Hinterachse 24 (die Raddrehzahlen der Vorderräder 30a und 30b der Vorderachse 28 würden dann herangezogen werden, wenn die Feststellbremse 34 zumindest auch auf diese wirken würde).

Auf eine ungewollte Erhöhung der auf die Hinterräder 26a und 26b durch die Feststellbremse 34 ausgeübten Bremswirkung während eines autonomen Fahrmanövers wird dann geschlossen, wenn eine Differenz der Raddrehzahlen der beiden Hinterräder 26a und 26b einen Schwellwert überschreitet. Wird dies festgestellt, wird die Bremswirkung auf jenes Rad, welches eine geringere Raddrehzahl als das andere Rad aufweist, teilweise (also nicht vollständig) reduziert. Diese Reduktion erfolgt schrittweise oder kontinuierlich bis festgestellt wird, dass die Differenz der Raddrehzahlen einen Schwellwert unterschreitet, also wieder zumindest im Wesentlichen gleich ist.

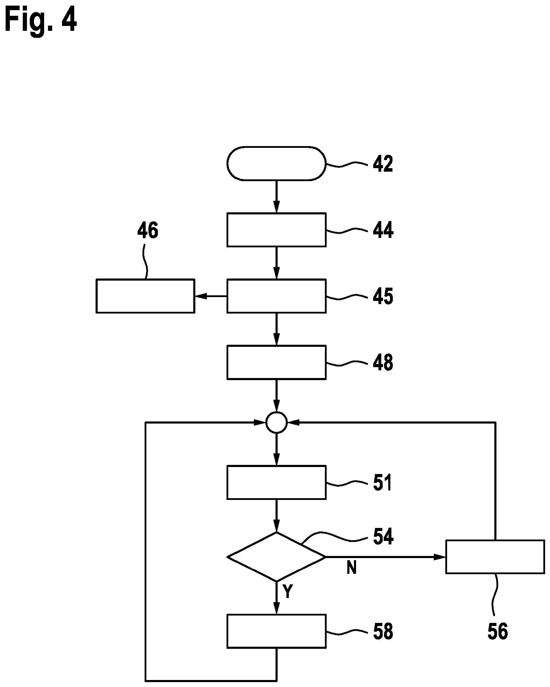

Nun wird unter Bezugnahme auf Figur 4 das soeben erwähnte Verfahren erläutert. Dabei wird jedoch nur noch auf jenen Bereich eingegangen, der sich von dem in Figur 3 beschriebenen Verfahren unterscheidet. Vor dem Vergleichsblock 54 ist ein Block 51, in dem die Differenz der Raddrehzahlen der beiden Hinterräder 26a und 26b ermittelt wird, und im Vergleichsblock 54 wird dann geprüft, ob diese Differenz größer ist als der Schwellwert.

Nicht dargestellt, jedoch ebenso möglich ist, dass die Feststellbremse nicht auf angetriebene Achse, sondern auf die Räder der nicht-angetriebenen Achse wirkt, vorliegend beispielhaft als auf die Räder der Vorderachse. Auch in diesem Fall kann die soeben beschriebene Variante angewendet werden. Auch hier drückt sich die ungewollt erhöhte Bremswirkung durch einen erhöhten Schlupf des entsprechenden Rades und eine entsprechend verringerte Drehzahl aus. Dabei kann in einer möglichen Ausgestaltung dieser Variante der Schwellwert für die Differenz in Abhängigkeit von einem Lenkeinschlag der angelenkten Vorderräder angepasst werden. Insbesondere kann der Schwellwert bei einem höheren Lenkeinschlag größer sein als bei einem geringeren Lenkeinschlag. Ferner kann der Schwellwert für die Differenz in Abhängigkeit von der Fahrtrichtung angepasst werden. Insbesondere kann der Schwellwert bei einem Fahrzeug mit Frontlenkung (wie in Figur 1 dargestellt) bei einer Rückwärtsfahrt größer sein als bei einer Vorwärtsfahrt.

Grundsätzlich denkbar, jedoch ebenfalls nicht dargestellt ist natürlich auch, dass die Feststellbremse auf sämtliche Achsen des Fahrzeugs wirkt und die Drehzahldifferenzen sämtlicher Achsen ausgewertet werden.

## Patentansprüche

1. Verfahren zur Fahrerassistenz, bei dem ein Fahrzeug (10) ein Einpark-Fahrmanöver automatisch ausführt, und bei dem eine Feststellbremse (34) während der Ausführung des Fahrmanövers zumindest teilweise betätigt wird, so dass ständig eine Bremswirkung auf die Räder (26) mindestens einer Achse (24) ausgeübt wird, so dass zur Bewegung des Fahrzeugs (10) ein Antrieb (22) des Fahrzeugs (10) gegen die Bremswirkung der Bremseinrichtung (34) arbeitet, wobei während des Fahrmanövers mindestens ein Betriebsparameter erfasst und ausgewertet wird, der mit einer nicht durch eine Ansteuerung bewirkten Erhöhung der auf mindestens ein Rad (26) ausgeübten Bremswirkung in einem Zusammenhang steht, und
wobei abhängig vom Ergebnis der Auswertung eine Bremswirkung auf mindestens ein Rad (26) reduziert wird,
wobei der Betriebsparameter die Raddrehzahlen der Räder (26) einer Achse (24) umfasst, und die Bremswirkung auf jenes Rad, welches eine geringere Raddrehzahl als das andere Rad aufweist, wenigstens dann teilweise reduziert wird, wenn eine Differenz der Raddrehzahlen der beiden Räder (26) einen Schwellwert überschreitet.

2. Verfahren nach Anspruch 1, wobei der Betriebsparameter eine ein Antriebsmoment des Antriebs (22) des Fahrzeugs (10) charakterisierende Größe umfasst, und dass die Bremswirkung auf die Räder (26) einer angetriebenen Achse (24) reduziert wird, wenn die das Antriebsmoment charakterisierende Größe oder eine Änderung der das Antriebsmoment charakterisierenden Größe eine Schwelle überschreitet.

3. Verfahren nach Anspruch 2, wobei die Bremswirkung auf die Räder (26) einer angetriebenen Achse (24) nur dann reduziert wird, wenn die Schwelle nicht mit einer Längsneigung (A) des Fahrzeugs (10) während des Fahrmanövers korreliert.

4. Verfahren nach wenigstens einem der Ansprüche 2-3, wobei zu Beginn des Fahrmanövers die Korrelation zwischen der Längsneigung (A) und der charakterisierenden Größe ermittelt wird.

5. Verfahren nach Anspruch 1, wobei der Schwellwert für die Differenz in Abhängigkeit von einem Lenkeinschlag angepasst wird, insbesondere, dass der Schwellwert bei einem höheren Lenkeinschlag größer ist als bei einem geringeren Lenkeinschlag.

6. Verfahren nach wenigstens einem der Ansprüche 1 oder 5, wobei der Schwellwert für die Differenz in Abhängigkeit von der Fahrtrichtung angepasst wird, insbesondere, dass bei einem Fahrzeug (10) mit Frontlenkung bei einer Rückwärtsfahrt der Schwellwert größer ist als bei einer Vorwärtsfahrt.

7. Verfahren nach wenigstens einem der Ansprüche 1, 5 oder 6, wobei die Bremswirkung auf die Räder (30) einer nicht angetriebenen Achse (28) ausgeübt wird.

8. Verfahren nach wenigstens einem der Ansprüche 1, 5, 6 oder 7, wobei die Bremswirkung auf die Räder (26) einer angetriebenen Achse (24) ausgeübt wird.

9. Steuer- und Regeleinrichtung (14) für eine Feststellbremse (34) eines Fahrzeugs (10), mit einem Prozessor und einem Speicher, die zur Ausführung eines Verfahrens nach wenigstens einem der vorhergehenden Ansprüche ausgebildet ist.

## Claims

1. Method for assisting a driver, in which method a vehicle (10) automatically carries out a parking driving manoeuvre and in which a parking brake (34) is at least partially activated while the driving manoeuvre is being carried out such that a braking effect is permanently exerted on the wheels (26) of at least one axle (24) such that a drive (22) of the vehicle (10) for moving the vehicle (10) operates counter to the braking effect of the brake installation (34), wherein at least one operating parameter which is associated with an increase of the braking effect exerted on at least one wheel (26) that is not caused by an actuation is detected and evaluated during the driving manoeuvre, and wherein a braking effect on at least one wheel (26) is reduced as a function of the result of the evaluation, wherein the operating parameter comprises the wheel rotating speeds of the wheels (26) of an axle (24), and the braking effect on that wheel that has a lower wheel rotating speed than the other wheel is reduced at least partially when a difference of the wheel rotating speeds of the two wheels (26) exceeds a threshold value.

2. Method according to Claim 1, wherein the operating parameter comprises a variable that characterizes a drive torque of the drive (22) of the vehicle (10), and that the braking effect on the wheels (26) of a driven axle (24) is reduced when the variable characterizing the drive torque, or a variation of the variable characterizing the drive torque, exceeds a threshold.

3. Method according to Claim 2, wherein the braking effect on the wheels (26) of a driven axle (24) is reduced only when the threshold does not correlate with a longitudinal inclination (A) of the vehicle (10) during the driving manoeuvre.

4. Method according to at least one of Claims 2-3, wherein the correlation between the longitudinal inclination (A) and the characterizing variable is determined at the beginning of the driving manoeuvre.

5. Method according to Claim 1, wherein the threshold value for the difference is adapted as a function of a steering angle, in particular that the threshold value is higher in the case of a larger steering angle than in the case of a smaller steering angle.

6. Method according to at least one of Claims 1 or 5, wherein the threshold value for the difference is adapted as a function of the driving direction, in particular that, in a vehicle (10) with front-wheel steering, the threshold value is higher when reversing than when travelling forward.

7. Method according to at least one of Claims 1, 5 or 6, wherein the braking effect is exerted on the wheels (30) of a non-driven axle (28).

8. Method according to at least one of Claims 1, 5, 6 or 7, wherein the braking effect is exerted on the wheels (26) of a driven axle (24).

9. Open-loop and closed-loop control installation (14) for a parking brake (34) of a vehicle (10), having a processor and a memory, said open-loop and closed-loop control installation (14) being configured for carrying out a method according to at least one of the preceding claims.

## Revendications

1. Procédé d'assistance au conducteur, dans lequel un véhicule (10) effectue automatiquement une manoeuvre de conduite de stationnement, et dans lequel un frein de stationnement (34) est au moins partiellement actionné pendant l'exécution de la manoeuvre de conduite de sorte qu'un effet de freinage est exercé constamment sur les roues (26) d'au moins un essieu (24) de sorte que pour déplacer le véhicule (10), un entraînement (22) du véhicule (10) agit contre l'effet de freinage du dispositif de freinage (34), dans lequel, pendant la manoeuvre de conduite, au moins un paramètre de fonctionnement est détecté et évalué qui est lié à une augmentation, provoquée par un pilotage, de l'effet de freinage exercé sur au moins une roue (26), et dans lequel un effet de freinage sur au moins une roue (26) est réduit en fonction du résultat de l'évaluation, dans lequel le paramètre de fonctionnement comprend les vitesses de rotation de roue des roues (26) d'un essieu (24), et l'effet de freinage sur la roue qui présente une vitesse de rotation de roue inférieure est réduit si une différence des vitesses de rotation de roue des deux roues (26) dépasse une valeur seuil.

2. Procédé selon la revendication 1, dans lequel le paramètre de fonctionnement comprend une grandeur caractérisant un couple d'entraînement de l'entraînement (22) du véhicule (10), et en ce que l'effet de freinage sur les roues (26) d'un essieu (24) entraîné est réduit si la grandeur caractérisant le couple d'entraînement ou une variation de la grandeur caractérisant le couple d'entraînement dépasse un seuil.

3. Procédé selon la revendication 2, dans lequel l'effet de freinage sur les roues (26) d'un essieu (24) entraîné n'est réduit que si le seuil n'est pas en corrélation avec une inclinaison longitudinale (A) du véhicule (10) pendant la manoeuvre de conduite.

4. Procédé selon au moins l'une des revendications 2 à 3, dans lequel la corrélation entre l'inclinaison longitudinale (A) et la grandeur caractérisante est établie au début de la manoeuvre de conduite.

5. Procédé selon la revendication 1, dans lequel la valeur seuil pour la différence est adaptée en fonction d'un angle de braquage, en particulier en ce que la valeur seuil pour un angle de braquage plus élevé est supérieure à celle pour un angle braquage moins élevé.

6. Procédé selon au moins l'une des revendications 1 ou 5, dans lequel la valeur seuil pour la différence est adaptée en fonction du sens de la marche, en particulier en ce que pour un véhicule (10) à direction avant, la valeur seuil lors d'une marche arrière est supérieure à celle lors d'une marche avant.

7. Procédé selon au moins l'une des revendications 1, 5 ou 6, dans lequel l'effet de freinage est exercé sur les roues (30) d'un essieu (28) non entraîné.

8. Procédé selon au moins l'une des revendications 1, 5, 6 ou 7, dans lequel l'effet de freinage est exercé sur les roues (26) d'un essieu (24) entraîné.

9. Dispositif de commande et de régulation (14) pour un frein de stationnement (34) d'un véhicule (10), comprenant un processeur et une mémoire, qui est réalisé pour exécuter un procédé selon au moins l'une des revendications précédentes.
